# EUROPEAN PATENT SPECIFICATION

(11) **EP 1 807 268 B1**
(45) Date of publication and mention of the grant of the patent: **19.03.2008**
(21) Application number: 04799405.8
(22) Date of filing: 05.11.2004
(51) Int. Cl.: B60C 23/04

(54) **PNEUMATIC TYRE FOR VEHICLE WHEELS PROVIDED WITH AN ANTENNA AND METHOD OF MANUFACTURING THEREOF**
LUFTREIFEN MIT ANTENNE FÜR FAHRZEUGRÄDER UND HERSTELLUNGSVERFAHREN DAFÜR
PNEUMATIQUE POUR ROUES DE VEHICULE POSSEDANT UNE ANTENNE, AINSI QUE PROCEDE DE FABRICATION ASSOCIE

(43) Date of publication of application: 18.07.2007
(73) Proprietor: PIRELLI TYRE S.p.A., 20126 Milano (IT)
(72) Inventor: MANCOSU, Federico, 20126 Milano (IT); FIORAVANTI, Anna Paola, 20126 Milano (IT); BRUSAROSCO, Massimo, 20126 Milano (IT); CARETTA, Renato, 20126 Milano (IT); DAGHINI, Guido Luigi, 20126 Milano (IT)
(74) Representative: Baroni, Matteo
(86) International application number: PCT/IT2004/000608
(87) International publication number: WO 2006/048899

(56) References cited:
- EP-A- 1 384 603
- WO-A-99/29525
- DE-A1- 10 300 160
- US-A1- 2003 132 893
- US-A1- 2003 217 797

## Description

The present invention relates to a pneumatic tyre for vehicle wheels, of the type provided with an antenna to enable transmission and/or reception of operating parameters of the tyre itself, for example.

The present invention also relates to a method of manufacturing said tyre.

On some vehicle typologies the necessity is felt to monitor the operating conditions of the tyres in real time and to keep a trace of the evolution in time of the parameters representative of said operation. In particular in the case of vehicles using tyres of the "run flat" type, i.e. tyres capable of ensuring travelling over some kilometric distance even in case of tyre deflation, provided some operating parameters are met such as maximum speed, temperature and maximum distance that can be travelled over, the above requirement becomes of the greatest importance for safe use of said type of tyres.

For instance, the parameters that are generally taken into account can be temperature, pressure, distance travelled over by the tyre, as well as parameters resulting from mathematical calculations that can be carried out within the tyre.

For the purpose, a transponder system can be mounted within the tyre, which system may comprise at least one sensor, a control unit and/or a data storage unit (such as a microprocessor) and an antenna; the antenna's task is to enable exchange of radiofrequency signals with the devices mounted onboard the vehicle.

In addition, the antenna can allow powering of the system present within the tyre without using a self-contained supply unit (e.g. batteries within the tyre). Therefore it is provided for the apparatus mounted onboard the vehicle to generate an electromagnetic field with which the antenna placed in the tyre can be coupled and from which said antenna can receive the necessary energy to be transmitted to the control unit and the sensor.

US 2004/0032377 discloses a tyre on the inner surface of which an antenna is mounted, together with the required circuitry for achieving a transponder system. The antenna and the other circuit elements are fastened to the tyre during manufacture of the tyre itself, so that connection between antenna and inner surface of the tyre is continuous along the circumferential extension of the tyre itself.

EP 1 384 603 A1 and WO99/29525 show a system in which antenna and transponder are at least partly housed in a ring of non conductive rubber material, said ring being in engagement with the inner surface of the tyre.

The Applicant has verified that the above described systems are unable to ensure a reliable constraint between the antenna and inner surface of the tyre and can cause damages to both of them during operation of the tyre, which damages can even lead to breaking of the antenna itself.

The tyre in fact, during use, is submitted to elastic deformations in the order of 3-5% in each of the three space directions; the antenna that is generally made of a metallic material, cannot withstand these deformations due to its lower intrinsic elasticity as compared with that of the tyre.

Therefore, following stresses to which the tyre is submitted, the antenna may break at one or more points thus preventing operation of the transreceiving system.

The Applicant has ascertained that this drawback is mainly due to the substantially continuous constraint proposed by known systems for application of the antenna to the tyre. In fact, a constraint of this nature, as it is obtained between a flexible body, i.e. the tyre, and a substantially rigid body, i.e. the antenna, causes the different forces acting on the tyre to be directly transmitted to the antenna, giving rise to the above mentioned faults or malfunctions.

The Applicant has therefore perceived that, in order to ensure the system integrity even in case of deformations to which the tyre is submitted under use conditions, it is necessary to make the antenna remain substantially decoupled from the forces transmitted by the tyre during running, while being always mechanically coupled with the tyre itself. Therefore the antenna must adapt itself to the tyre deformations through variation of its geometric arrangement rather than through elongation.

In more detail, the antenna is engaged with the radially inner surface of the tyre by discrete constraint elements so that each pair of constraint elements identifies an orthodromic distance smaller than the length of the antenna portion included between said pair of elements.

In this context by "orthodromic distance" it is intended the minimum distance between two points on a toroidal surface.

In this way, this length is sufficient to enable adaptation thereof to the tyre deformations, i.e. the antenna is substantially decoupled from the mechanical stresses transmitted from the tyre. Thus the antenna is prevented from being submitted to stresses capable of impairing its integrity at one or more points.

In particular, in a first aspect the present invention relates to a tyre for vehicle wheels having a radially inner surface of a substantially toroidal conformation, comprising: at least one antenna provided with an electrically conductive elongated body in engagement with said radially inner surface through a plurality of constraint elements, wherein each pair of consecutive constraint elements identifies an orthodromic distance smaller than the length of the elongated-body portion included between said pair of elements.

In a further aspect the present invention relates to a method of setting at least one antenna on a radially inner surface of a tyre of substantially toroidal conformation, said method comprising the following steps: setting at least one electrically conductive elongated body; fastening said elongated body to said inner surface at a plurality of constraint elements, so that each pair of consecutive constraint elements identifies an orthodromic distance smaller than the length of the elongated-body portion included between said pair of elements.

Further features and advantages will become more apparent from the detailed description of a preferred but not exclusive embodiment of a tyre for vehicle wheels, and of a method of setting at least one antenna on a radially inner surface of said tyre, in accordance with the present invention.

This description will be set out hereinafter with reference to the accompanying drawings, given by way of non-limiting example, in which:
- Fig. 1 is a partial perspective view of a tyre in accordance with the invention;
- Fig. 1b is a partial perspective view of an inner surface of the tyre in accordance with the invention;
- Figs. 2 and 3 diagrammatically show planar extensions of an inner surface of the tyre in Fig. 1;
- Fig. 4a is a partial section along line IV-IV of a first embodiment of the tyre seen in Fig. 1;
- Fig. 4b is a partial section along line IV-IV of a second embodiment of the tyre seen in Fig. 1;
- Fig. 5 is a partial perspective view of a further embodiment of the tyre seen in Fig. 1;
- Fig. 6 is a partial section view taken along line VI-VI of a detail seen in Fig. 5;
- Fig. 7 is a block diagram of a device being part of the tyre in Fig. 1;
- Fig. 8 is a plan view of an operating element used in the method of the invention.

With reference to the drawings, a tyre for vehicle wheels in accordance with the invention has been generally identified with reference numeral 1.

Tyre 1 can be mounted on any type of vehicles such as motor-vehicles or motorcycles; in more detail, tyre 1 is set to be used on vehicles that onboard are provided with the electronics necessary to co-operate and interact with the devices that are housed in the tyre itself and that will be described in the following.

Tyre 1 has a radially inner surface 2 of substantially toroidal conformation; this inner surface can be defined by a layer of elastomer material currently referred to as "liner".

Mounted on said radially inner surface 2 is a control unit 3 set to detect and/or store, and/or process operating parameters relating to tyre 1 and to the operating conditions of the latter.

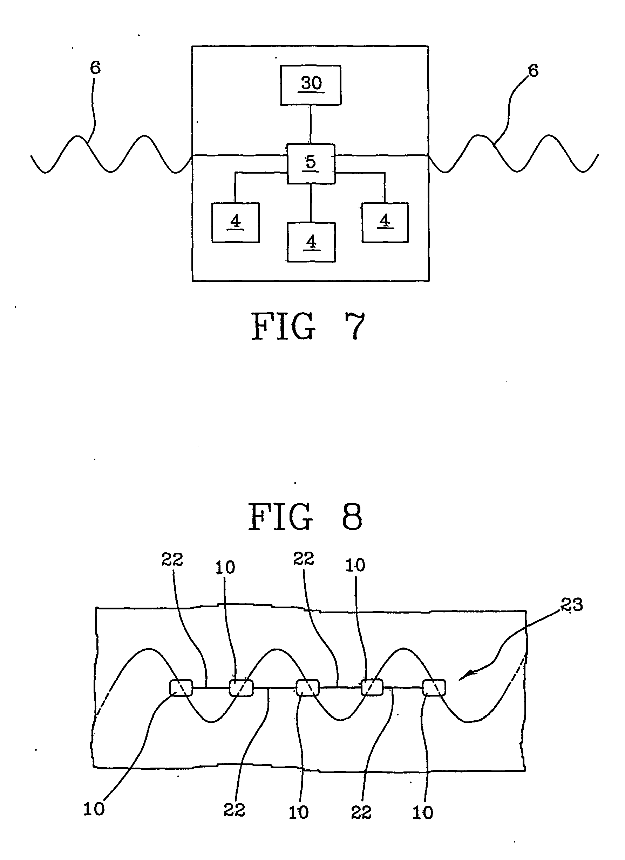

The control unit 3 (diagrammatically shown in Fig. 7) may comprise one or more sensors 4 for detecting said operating parameters; said parameters can be tyre temperature, inner tyre pressure, and/or distance travelled over possibly calculated in co-operation with the devices located onboard.

The control unit 3 is further provided with a microprocessor 5 connected with said sensors 4 for operation control; also associated with microprocessor 5 is a memory 30 to store data detected by sensors 4.

Also stored in memory 30 can be data identifying tyre 1, so that the latter can be univocally recognised during processing and evaluation of the above mentioned operating parameters.

It is to be pointed out that in a different embodiment, when only reading of data identifying tyre 1 and/or the possibility of storing further data concerning the same is of interest, the control unit 3 may comprise the only memory 30 controlled by microprocessor 5.

Preferably, microprocessor 5 is set to talk to an electronic device positioned onboard the vehicle on a wheel of which tyre 1 is mounted.

To enable communication between microprocessor 5 and the electronic device placed onboard, an antenna 6 is provided to be operatively associated with the control unit 3 and, in particular, microprocessor 5.

Antenna 6 is preferably mounted on the radially inner surface 2 of tyre 1.

In addition to the above, antenna 6 can be also used to power the control unit 3 and the devices contained therein, so that use of self-governed power supply units within tyre 1 is avoided.

For the purpose, antenna 6 has a loop conformation (or more exactly a conformation of the "closed" type as defined in the following), so that it can be coupled with an electromagnetic field generated by the device present onboard the vehicle and absorb the energy required for power supply of the control unit 3.

Data exchange between microprocessor 5 and said electronic device takes place through transmission and reception of radiofrequency signals (RF signals), the frequency of which may be included between about 100 kHz and about 50 MHz, and preferably can correspond to about 125 kHz. In particular this frequency range can be used if the control unit 3 is wished to be fed by the antenna 6 itself which in this case will have a configuration of the "closed" type. On the contrary, if antenna 6 is preferably used for data transmission/reception, also frequencies included between about 300 mHz and about 2.5 GHz may be contemplated and in this case antennas with a configuration of the "open" type are used.

In the present context and in the appended claims, by antenna of the "open" type it is intended an antenna the conformation of which defines an electrically open circuit. For example, the antenna body can have one or more ends connected with the control unit 3 and one or more "free" ends.

By the expression antenna of the "closed" type it is intended an antenna the conformation of which defines an electrically closed circuit.

The co-operation between the onboard devices, antenna 6 and control unit 3 therefore constitutes a transponder system enabling the control unit 3 to operate also in the absence of batteries or similar powering units mounted within tyre 1.

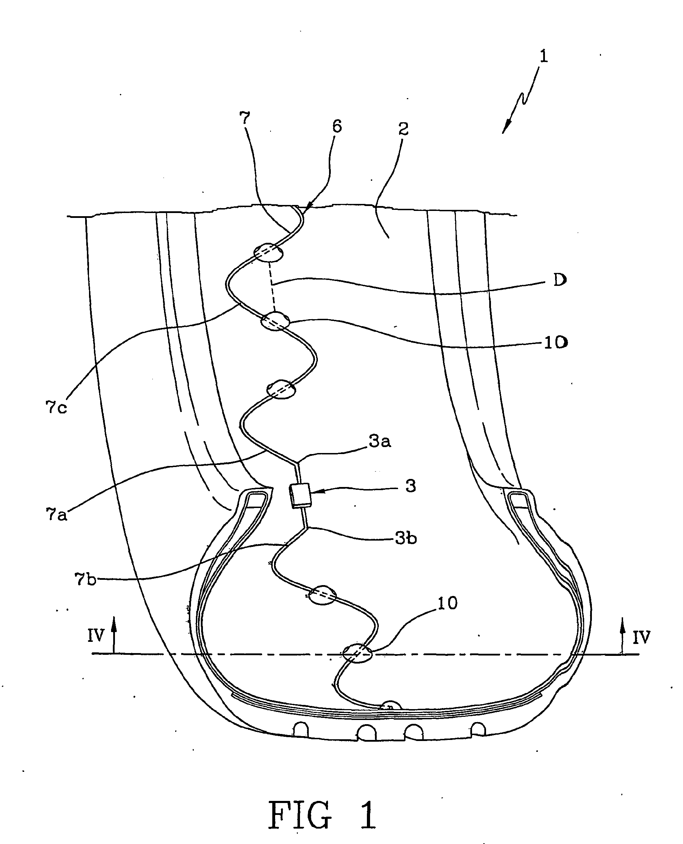

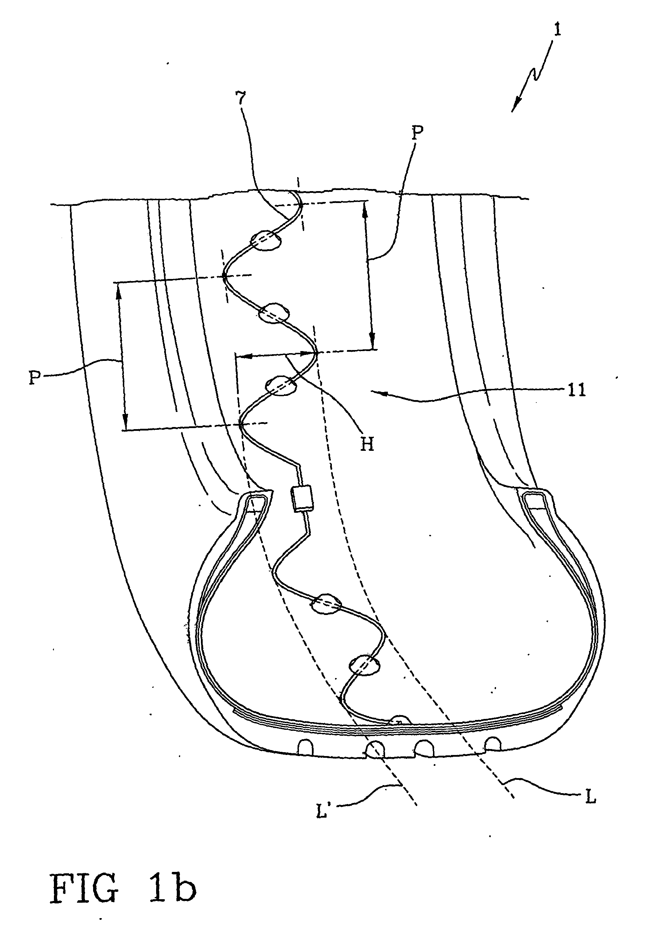

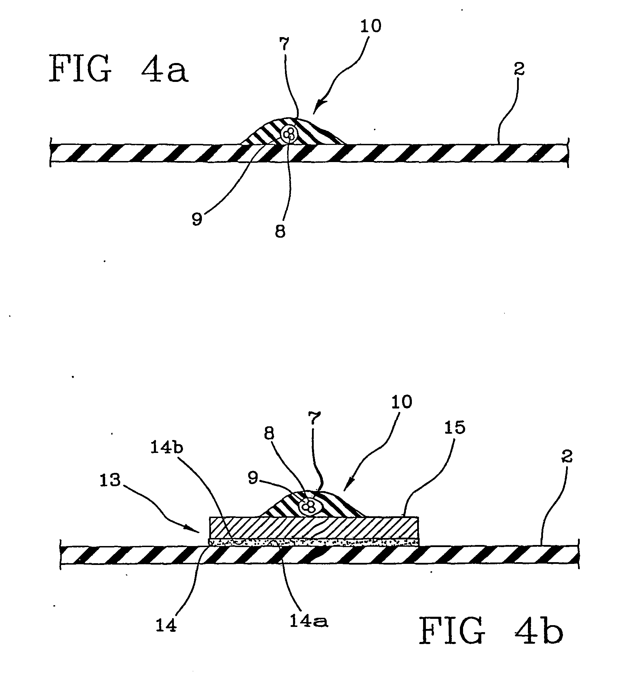

Antenna 6 (Fig. 1) is provided with an electrically-conductive elongated body 7 in engagement with the inner surface 2 of tyre 1 through a plurality of constraint elements 10; more particularly, the elongated body 7 comprises at least one electric conductor 8 and at least one protective -coating 9 for the electric conductor (Figs. 4a, 4b). Preferably the protective coating 9 is made of an elastomer material and has a specific electric resistance in accordance with UNI 4288 standard included between about 10.0 ohm/meter and about 10⁹ ohm/meter.

The protective coating 9, as better clarified in the following, enables the effects of the direct contact between the more flexible radially inner surface 2 of tyre 2 (the liner's surface, for example) and the elongated body 7 of a more rigid metallic material to be reduced, which contact can cause wear, local abrasions, cuts.

In this way, the protective coating 9 reduces to the minimum the possibility that the antenna 6 by its oscillation during normal use of tyre 1, may damage the radially inner surface 2 of said tyre in an important manner.

In a first preferred embodiment, the electric conductor 8 is a cord manufactured following the 7x3 scheme, i.e. a cord made up of 7 strands each formed of 3 brass-coated steel wires or copper wires, each of said wires having a diameter included between about 0.1 mm and about 0.2 mm. Preferably, in order to reduce the overall impedance of antenna 6, for the three wires of the central strand (that are less stressed) use of copper is preferred, whereas for the other wires of the remaining 6 strands, steel is used.

For an antenna 6 having an elongated body 7 as long as about 2.5 m, if wires of a diameter of 0.15 mm are used, the impedance is of about 2.1 ohm if the wires are made of brass-coated steel; if copper wires are used, the impedance is of about 0.21 ohm; if 6 strands of brass-coated steel and one (the central strand) of copper are used, the impedance is of about 1.5 ohm.

In a further alternative embodiment, the electric conductor 8 can be a cord manufactured following the 3x3 scheme, i.e. having the same structure as above described but comprising 3 strands instead of 7 with a diameter for the wires included between about 0.1 mm and about 0.2 mm; in this case, with use of brass-coated steel wires of a diameter of about 0.12 mm, an antenna 6 having an impedance of about 7 ohm is obtained.

In another embodiment, the electric conductor 8 can consist of a cord manufactured following the hybrid 2+2 scheme, in which 2 wires of brass-coated steel wound upon themselves are twisted with 2 aluminium wires wound upon themselves; the diameter of each wire is included between about 0.2 mm and about 0.3 mm, and the impedance of antenna 6 with use of wires with a diameter of about 0.25 mm is about 3 ohm.

Generally, antenna 6 has an impedance included between about 0.02 ohm and about 10 ohm, and more particularly an impedance included between about 0.02 ohm and about 5 ohm; preferably, the impedance value of antenna 6 can be of about 1 ohm.

Generally; the elongated body 7 of antenna 6 has a first end 7a operatively associated with a first end 3a of the control unit 3, and a second end 7b operatively associated with a second end 3b of the control unit 3; depending on requirements and the features of the transponder system used, antenna 6 can be both of the open or the closed type.

As above mentioned, the elongated body 7 is in engagement with the radially inner surface 2 of tyre 1 through a plurality of constraint elements 10; this engagement is made in such a manner that each pair of consecutive constraint elements 10 identifies an orthodromic distance D smaller than the length of portion 7c of the elongated body 7 included between said pair of elements 10 and measured along the extension of the elongated body 7 itself.

In other words, the elongated body 7 is mounted in such a manner that it is disposed in a circumferential conformation (rectilinear in a plane extension) between consecutive constraint elements 10, but it is left suitably free to move in the presence of the different stresses so that it can adapt itself to the variations in the mutual distance between said constraint elements 10 due to the deformations to which the radially inner surface 2 of tyre 1 is submitted in use, in particular but not only at the footprint area.

In this way antenna 6 while remaining mechanically coupled with tyre 1, is substantially decoupled from the forces transmitted therefrom during running; in fact antenna 6 adapts itself to the tyre 1 deformations through variations in its geometrical arrangement in the lengths concerned with said deformations, without being subjected to stresses capable of impairing integrity of same.

The Applicant has observed that the above described behaviour is of the greatest importance during use of run flat tyres (i.e. tyres provided with reinforcing inserts at the sidewalls enabling running under deflated conditions too) when at least one of said tyres is deflated, i.e. during a flat running of one of them. In fact, the inventive tyre 1 transmits to the antenna, the forces due to ground contact in a negligible manner, said forces being much greater than those acting during running under normal inner-pressure conditions. In this way even during the most severe tyre conditions it is always possible for the driver to "read" the tyre state and thus improve the vehicle's safety conditions.

The elongated body 7 preferably has an undulated longitudinal extension 11 defined by a succession of waves, each extending between two axially spaced ends. By joining said axially spaced ends to each other in the region close to one tyre sidewall by orthodromic lines and by joining said axially spaced ends to each other in the region close to the opposite tyre sidewall, two lines are obtained that are defined "end lines" L, L' (Fig. 1b).

In the present specification and the appended claims, by pitch "P" of each wave it is intended the segment of the same end line included between two axially spaced subsequent ends.

In the present specification and the appended claims, by height "H" of each wave it is intended the orthodromic distance between one of said axially spaced ends and the end line opposite thereto.

In a preferred embodiment, said undulated longitudinal extension 11 has a substantially sinusoidal configuration where each end line is coincident with the line joining the points of maximum and with the line joining the points of minimum respectively, wherein pitch P of each wave is coincident with the orthodromic distance between two subsequent points of maximum or minimum and the height H is coincident with the distance between a point of maximum and the stretch (rectilinear in a plane extension) defining pitch P relating to that wave.

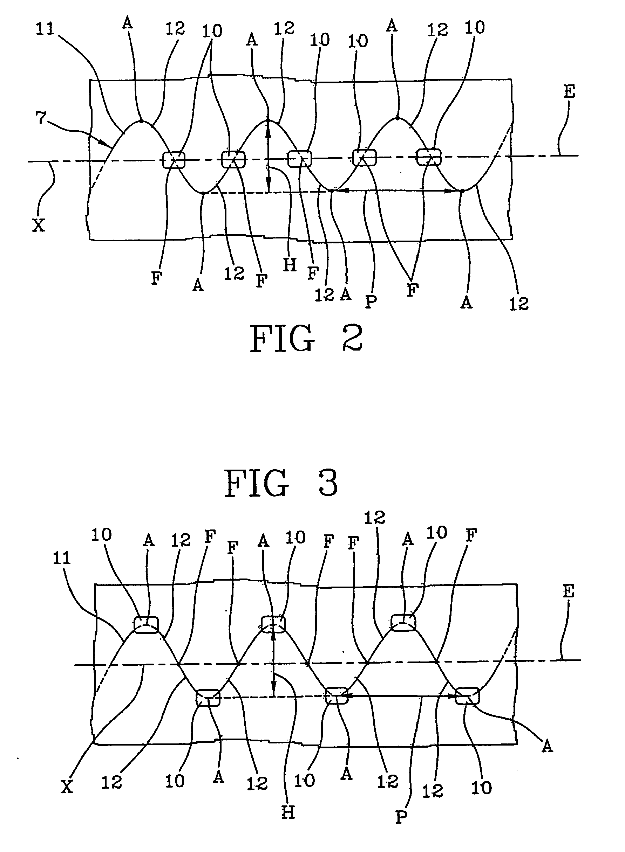

In this preferred embodiment each wave can be divided into two semi-waves 12, each having opposite concavity with respect to the adjacent semi-waves (Figs. 2-3).

Therefore, each semi-wave 12 is included between two consecutive inflection points F, each of which identifies the change of concavity between a semi-wave 12 and the preceding or following semi-wave.

The inflection points F of the undulated extension 11 having a substantially sinusoidal configuration follow each other on the inner surface 2 of tyre 1 along a line preferably substantially disposed in an equatorial plane E of tyre 1 that from now on will be denoted as "longitudinal axis" X of the undulated extension 11.

Preferably, the ratio between the wave pitch P and the wave height H of the undulated extension 11 of the elongated body 7 is included between about 1 and about 5.

More particularly, this ratio is included between about 4/3 and about 4, and in a preferred embodiment this ratio is substantially equal to about 10/3.

Practically, the wave pitch P of the undulated extension 11 in a substantially sinusoidal configuration (Figs. 2 and 3) can be of about 100 mm for example, with a height H of about 30 mm; with a tyre having an extension of the equatorial line as long as about 2 metres, about 40 constraint elements can be used and the length of the elongated body is of about 2510 mm.

The constraint elements 10 used for fastening antenna 6 to the inner surface 2 can be positioned at the maximum or minimum points "A" of the sinusoidal configuration of the undulated extension 11 (Fig. 3).

Alternatively, or in addition to the above, the constraint elements 10 can be located at the inflection points F of said sinusoidal configuration in the undulated extension 11 of the elongated body 7 (Fig. 2).

In the last-mentioned case, the constraint elements 10 are preferably substantially positioned in the equatorial plane E of tyre 1. In addition, said constraint elements 10 can be disposed in any convenient manner adapted to ensure both adhesion of antenna 2 to the radially inner surface of tyre 1 and said substantial decoupling between the forces acting on the tyre and those transmitted to the antenna.

In a first embodiment (Fig. 4a), the constraint elements 10 consist of plates of silicone-based sealing elastomer material enabling direct and substantially elastic fastening of the elongated body 7 to the radially inner surface 2 of tyre 1.

This material has good mechanical features and excellent adhesion properties -for bonding to the inner surface 2.

In a second embodiment (Fig. 4b) each constraint element 10 is provided with a coupling insert 13 comprising at least one adhesive element 14; this adhesive element has the task of fastening the elongated body 7 to the radially inner surface of tyre 1.

Preferably, the adhesive element 14 can be made as a two-sided adhesive tape having a first adhesive surface 14a that is brought into contact with the inner surface 2 of tyre 1 and a second adhesive surface 14b to which the elongated body 7 is fastened.

Advantageously, each coupling insert 13 further comprises an elastomer layer 15 interposed between the elongated body 7 and said adhesive element 14.

The elastomer layer 15, at each constraint element 10, can consist of a rubber plate having a hardness included between about 30° Shore A and about 70° Shore A (measured at 25°C) and a specific electric resistance in accordance with UNI 4288 standard included between about 100 ohm/meter and about 10⁹ ohm/meter.

The elongated body 7 can be fastened to the constraint elements 10 by means of said silicone-based sealing elastomer material or by different materials which in any case are provided with sufficient elasticity and flexibility once they are set up, to ensure adhesion between elements and decoupling between forces as presently illustrated.

Preferably, during manufacturing of tyre 1, the elongated body 7 is engaged to the constraint elements 10 before positioning the constraint elements 10 on the radially inner surface 2 of tyre 1.

In particular, it is provided that a succession 23 of constraint elements 10 be set (Fig. 8), each being preferably made as above described; each constraint element 10 being in engagement with the adjacent constraint elements through a provisional constraint 22.

This provisional constraint 22 can be obtained by means of a thin cotton thread for example that can be easily removed at the end of the manufacturing process.

Subsequently, the elongated body 7 is brought into engagement with the constraint elements 10 of said succession 23; the distance between each pair of adjacent constraint elements 10, in the case of sinusoidal extension of the elongated body 7, can define the wave half pitch P/2 (Fig. 2) of the undulated extension 11 of the elongated body 7.

In a subsequent step, through the adhesive elements 14, the succession 23 of the constraint elements 10 is fastened to the radially inner surface 2 of tyre 1.

Consequently, the elongated body 7 too is in engagement with the inner surface 2 of tyre 1. Finally, each provisional constraint 22 between adjacent constraint elements 10 can be removed; in this way, after defining the mutual position of the constraint elements 10 during the step of fastening the latter to the inner surface 2, these constraint elements 10 are no longer mutually tied and therefore can follow the displacements determined by the deformations to which tyre 1 is submitted during its use.

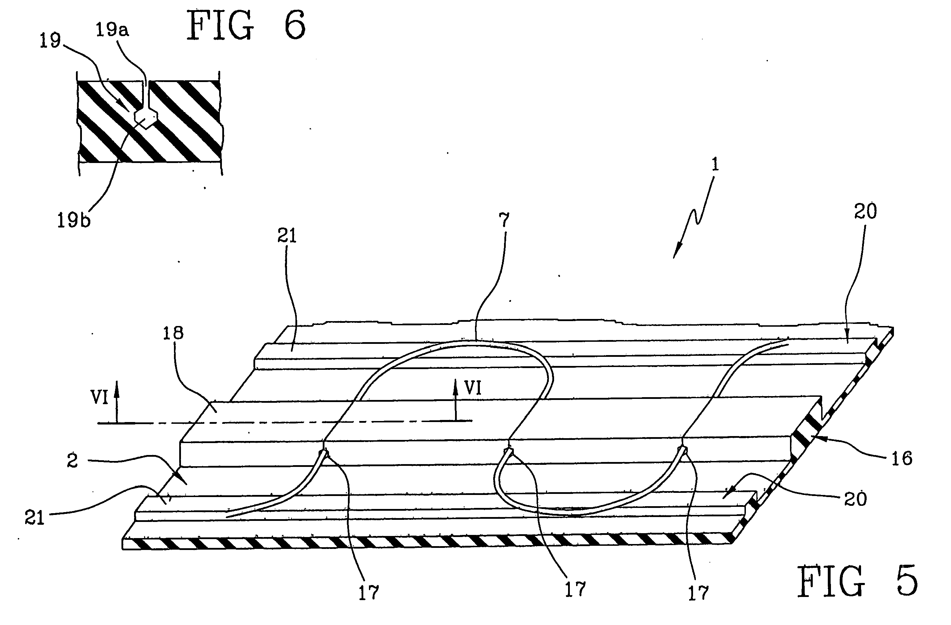

In a further embodiment, the radially inner surface 2 of tyre 1 has a radially inner ridge 16 that is provided with a plurality of engagement seats 17. Each engagement seat 17 shown in detail in Figs. 5 and 6, defines a corresponding constraint element 10.

In a preferred embodiment each engagement seat 17 is spaced away from the adjacent seats by a stretch equal to the wave half pitch P/2 (Fig. 5) in the undulated extension 11 of a substantially sinusoidal configuration of the elongated body 7.

Preferably, the radially inner ridge 16 is defined by a circumferentially continuous main rib 18 on the inner surface 2 of tyre 1, the longitudinal symmetry axis of said main rib 18 being substantially contained in the equatorial plane E of tyre 1.

The engagement seats 17 can be obtained by making suitable cavities 19 in the main rib 18; advantageously, each cavity 19 has an inlet portion 19a and a housing portion 19b.

The inlet portion 19a is preferably defined by a cut formed in a transverse direction to the longitudinal extension of the main rib 18; this cut has a smaller width than the diameter of the elongated body 7 to enable a forced fitting into the engagement seat 17.

The housing portion 19b is at a radially external position relative to the inlet portion 19a and has the task of housing the elongated body 7 in a manner adapted to obtain mutual engagement between the elongated body 7 and the main rib 18.

Advantageously, after insertion of the elongated body 7 in said engagement seats 17 it is provided that one or more of said seats together with the elongated body portion housed therein, should be covered with at least one layer of adhesive material, a silicone-based covering and sealing material for example, having good flexibility features. In this way the constraint existing between the elongated body 7 and the radially inner surface 2 of tyre 1 is made more reliable and stronger.

Preferably tyre 1 further comprises one or more support ridges 20 located on the radially inner surface 2 of tyre 1.

The support ridges 20 enable the portions of the elongated body 7 that are not housed in said engagement seats 17 to rest thereon at least partly, so as to prevent said portions from being submitted to oscillations of great importance during use of tyre 1, at the risk of impairing the integrity of tyre 1 and/or antenna 6.

In a preferred embodiment, the support ridges 20 can comprise a pair of circumferentially continuous auxiliary ribs 21 positioned in planes substantially parallel to the equatorial plane E of tyre 1.

Preferably, the auxiliary ribs 21 are positioned on opposite sides of, and preferably spaced apart the same distance from said main rib 18 and they offer a rest to the outermost portions of the elongated body 7.

In a further preferred embodiment, the main rib 18 and possibly the auxiliary ribs 21 are superposed over an auxiliary layer (not shown) disposed radially external to said ribs 18, 21, directly in contact with the radially inner surface of tyre 1.

Said auxiliary layer, having protective functions with respect to the radially inner surface of tyre 1, can be made of elastomer material or other material compatible with the tyre structure. Preferably the auxiliary layer has a width in an axial direction included between about 60 mm and about 100 mm and a thickness in a radial direction included between about 0.1 mm and about 0.3 mm.

It is to be noted that the main rib 18, auxiliary ribs 21 and auxiliary layer can all be made directly on tyre 1 during the manufacturing process of same; alternatively, ribs 18, 21 and/or the auxiliary layer can be made separately and fastened to the inner surface 2 of tyre 1, through gluing for example, at the end of the manufacturing process of tyre 1.

## Claims

1. A tyre for vehicle wheels having a radially inner surface (2) of a substantially toroidal conformation, comprising:
- at least one antenna (6) provided with an electrically conductive elongated body (7) in engagement with said radially inner surface (2) through a plurality of constraint elements (10);
**characterised in that**
each pair of consecutive constraint elements (10) identifies an orthodromic distance (D) smaller than the length of the elongated-body portion (7c) included between said pair of elements (10).

2. A tyre as claimed in claim 1, wherein said elongated body (7) comprises:
- at least one electric conductor (8);
- at least one protective coating (9) for said electric conductor (8).

3. A tyre as claimed in claim 2 wherein said protective coating is made of a material having a specific electric resistance in accordance with UNI 4288 standard included between about 100 ohm/meter and about 10⁹ ohm/meter.

4. A tyre as claimed in claim 2 or 3, wherein said electric conductor (8) comprises a cord made up of seven strands, each formed of three wires.

5. A tyre as claimed in claim 4, wherein a central strand is made up of copper wires and the remaining six strands are made up of brass-coated steel wires.

6. A tyre as claimed in claim 2 or 3, wherein said electric conductor (8) comprises a cord made up of three strands each formed of three wires.

7. A tyre as claimed in claim 2 or 3, wherein said electric conductor (8) comprises a cord made up of two brass-coated steel wires wound upon themselves and twisted with two aluminium wires wound upon themselves.

8. A tyre as claimed in anyone of the preceding claims,
wherein said elongated body (7) in engagement with said radially inner surface (2) of the tyre (1) has an undulated extension (11).

9. A tyre as claimed in claim 8, wherein said undulated extension (11) has a wave height (H) and a wave pitch (P), the ratio between said pitch (P) and said height (H) being included between about 1 and about 5.

10. A tyre as claimed in claim 9, wherein said ratio is included between about 4/3 and about 4.

11. A tyre as claimed in anyone of claims 8 to 10,
wherein said undulated extension (11) is a sinusoidal extension.

12. A tyre as claimed in anyone of the preceding claims, wherein said constraint elements (10) are located at inflection points (F) of said elongated body (7).

13. A tyre as claimed in anyone of claims 8 to 11, wherein said constraint elements (10) are located at the axially spaced ends of the undulated extension (11) of said elongated body (7).

14. A tyre as claimed in anyone of claims 1 to 12, wherein said constraint elements (10) are substantially positioned in the equatorial plane (E) of said tyre (1).

15. A tyre as claimed in anyone of the preceding claims further comprising a control unit (3) to receive and/or transmit identification parameters of said tyre (1) through said antenna (6).

16. A tyre as claimed in anyone of claims 1 to 14, further comprising a control unit (3) to receive and/or transmit operating parameters of said tyre (1) through said antenna (6).

17. A tyre as claimed in claim 16, wherein said control unit (3) is mounted on the radially inner surface (2) of said tyre (1) and has a first and a second ends (3a, 3b), said elongated body (7) having a first end (7a) operatively associated with the first end (3a) of said control unit (3), and a second end (7b) operatively associated with the second end (3b) of said control unit (3).

18. A tyre as claimed in anyone of the preceding claims, wherein said antenna (6) has an impedance included between about 0.02 ohm and about 10 ohm.

19. A tyre as claimed in claim 18, wherein said antenna has an impedance (6) included between about 0.02 ohm and about 5 ohm.

20. A tyre as claimed in claim 1, wherein each of said constraint elements (10) comprises a coupling insert (13) provided with at least one adhesive element (14) interposed between said elongated body (7) and said inner surface (2).

21. A tyre as claimed in claim 20, wherein each of said coupling inserts (13) further comprises an elastomer layer (15) interposed between said adhesive element (14) and said elongated body (7).

22. A tyre as claimed in anyone of claims 1 to 19,
wherein the radially inner surface (2) of said tyre (1) has at least one radially inner ridge (16) for mutual engagement between said elongated body (7) and said tyre (1).

23. A tyre as claimed in claim 22, wherein said at least one ridge (16) is provided with one or more engagement seats (17), each defining said constraint element (10) between said elongated body (7) and the radially inner surface (2) of said tyre (1).

24. A tyre as claimed in claim 22 or 23, wherein said ridge (16) is defined by a main rib (18) that is circumferentially continuous on the radially inner surface (2) of said tyre (1) and is substantially positioned in the equatorial plane (E) thereof.

25. A tyre as claimed in anyone of claims 22 to 24, further comprising one or more support ridges (20) on the radially inner surface (2) of the tyre (1) on which said elongated body (7) rests.

26. A tyre as claimed in claim 25, wherein said one or more support ridges (20) comprise a pair of circumferentially continuous auxiliary ribs (21) positioned in planes parallel to the equatorial plane (E) of said tyre (1) on opposite sides relative to said main rib (18) .

27. A tyre as claimed in anyone of claims 22 to 26, wherein said tyre (1) comprises an auxiliary layer radially external to said radially inner ridge (16).

28. A tyre as claimed in claim 27, wherein said auxiliary layer has an axial width included between about 60 mm and about 100 mm, and a radiaL thickness included between about 0.1 mm and about 0.3 mm.

29. A tyre as claimed in anyone of the preceding claims, wherein the antenna (6) is of the open type.

30. A tyre as claimed in anyone of claims 1 to 28, wherein the antenna (6) is of the closed type.

31. A method of setting at least one antenna (6) on a radially inner surface (2) of a tyre (1) of substantially toroidal conformation, said method comprising the following steps:
- setting at least one electrically conductive elongated body (7);
- fastening said elongated body (7) to said inner surface (2) at a plurality of constraint elements (10),
**characterised in that** each pair of consecutive constraint elements (10) identifies an orthodromic distance (D) smaller than the length of the elongated-body portion (7c) included between said pair of elements (10).

32. A method as claimed in claim 31, wherein the step of fastening said elongated body (7) to said radially inner surface (2) comprises the following steps:
- positioning said constraint elements (10) on the radially inner surface (2) of the tyre (1);
- bringing said elongated body (7) into engagement with each of said constraint elements (10).

33. A method as claimed in claim 32, wherein the step of positioning said constraint element (10) comprises a step of interposing an adhesive element (14) between said elongated body (7) and said radially inner surface
(2).

34. A method as claimed in claim 33, wherein the step of positioning said constraint element (10) comprises a step of disposing a layer of elastomer material (15) between said adhesive element (14) and said elongated body (7).

35. A method as claimed in anyone of claims 31 to 34, wherein said constraint elements (10) are fastened to the radially inner surface (2) of the tyre (1) substantially at the equatorial plane (E) thereof.

36. A method as claimed in anyone of claims 33 to 35, wherein the step of engaging said elongated body (7) with said constraint elements (10) is carried out before positioning said constraint elements (10) on said radially inner surface (2).

37. A method as claimed in claim 32, wherein the step of fastening said elongated body (7) to said inner surface (2) further comprises:
- setting a succession (23) of constraint elements (10), each in engagement with the adjacent constraint elements (10) through a provisional constraint (22);
- bringing said elongated body (7) into engagement with said constraint elements (10);
- bringing said constraint elements (10) into engagement with said inner surface (2);
- removing said provisional constraint (22).

38. A method as claimed in claim 31, wherein the step of fastening said elongated body (7) to said radially inner surface (2) comprises:
- setting at least one radially inner ridge (16) on said radially inner surface (2);
- forming at least one engagement seat (17) in said at least one ridge (16), each seat defining a respective constraint element (10) between said elongated body (7) and said radially inner surface (2).

39. A method as claimed in claim 38, wherein said step of fastening said elongated body (7) to said radially inner surface (2) comprises the steps of:
- engaging said elongated body (7) in said at least one engagement seat (17);
- covering said at least one engagement seat (17) and said elongated body (7) engaged therein with at least one layer of adhesive material.

40. A method as claimed in claim 38, wherein the step of forming said at least one ridge (16) comprises a step of making a circumferentially continuous main rib (18) on said radially inner surface (2), the longitudinal symmetry axis of said main rib (18) being substantially contained in the equatorial plane (E) of the tyre (1).

41. A method as claimed in anyone of claims 38 to 40, further comprising a step of making at least one support ridge (20) on which said elongated body (7) rests .

42. A method as claimed in claim 41, wherein the step of making said at least one support ridge (20) comprises a step of making a pair of circumferentially continuous auxiliary ribs (21) on said radially inner surface (2), which auxiliary ribs are positioned in planes parallel to the equatorial plane (E) of said tyre (1) on opposite sides relative to said main rib (18).

43. A method as claimed in anyone of claims 38 to 42, wherein the step of setting at least one radially inner ridge (16) on said radially inner surface (2) is carried out after a step of setting an auxiliary layer at a radially inner position to said radially inner surface (2) of the tyre (1) .

## Patentansprüche

1. Reifen für Fahrzeugräder, wobei der Reifen
- eine radial innere Fläche (2) mit einer im Wesentlichen torusförmigen Ausgestaltung und
- wenigstens eine Antenne (6) aufweist, die mit einem elektrisch leitenden langgestreckten Körper (7) versehen ist, der mit der radial inneren Fläche (2) über eine Vielzahl von Halteelementen (10) in Eingriff steht,
**dadurch gekennzeichnet,**
- **dass** jedes Paar von aufeinanderfolgenden Halteelementen (10) einen orthodromen Abstand (D) bildet, der kleiner ist als die Länge des Abschnitts (7c) des langgestreckten Körpers, der sich zwischen dem Paar von Elementen (10) befindet.

2. Reifen nach Anspruch 1, bei welchem der langgestreckte Körper (7) wenigstens einen elektrischen Leiter (8) und wenigstens einen Schutzüberzug (9) für den elektrischen Leiter (8) aufweist.

3. Reifen nach Anspruch 2, bei welchem der Schutzüberzug aus einem Material hergestellt ist, das einen spezifischen elektrischen Widerstand nach der Norm UNI 4288 zwischen etwa 100 Ohm/m und etwa 10⁹ Ohm/m hat.

4. Reifen nach Anspruch 2 oder 3, bei welchem der elektrische Leiter (8) einen Kord aufweist, der aus sieben Litzen hergestellt ist, von denen jede von drei Drähten gebildet wird.

5. Reifen nach Anspruch 4, bei welchem eine zentrale Litze aus Kupferdrähten hergestellt ist und die übrigen sechs Litzen aus mit Messing beschichteten Stahldrähten hergestellt sind.

6. Reifen nach Anspruch 2 oder 3, bei welchem der elektrische Leiter (8) einen Kord aufweist, der aus drei Litzen hergestellt ist, von denen jede von drei Drähten gebildet wird.

7. Reifen nach Anspruch 2 oder 3, bei welchem der elektrische Leiter (8) einen Kord aufweist, der aus zwei auf sich selbst gewickelten, mit Messing beschichteten Stahldrähten hergestellt und mit zwei auf sich selbst gewickelten Aluminiumdrähten verdrillt ist.

8. Reifen nach einem der vorhergehenden Ansprüche, bei welchem der langgestreckte Körper (7), der mit der radial inneren Fläche (2) des Reifens (1) in Eingriff steht, eine wellenförmige Erstreckung (11) hat.

9. Reifen nach Anspruch 8, bei welchem die wellenförmige Erstreckung (11) eine Wellenhöhe (H) und eine Wellenlänge (P) hat, wobei das Verhältnis zwischen Länge (P) und Höhe (H) zwischen etwa 1 und etwa 5 liegt.

10. Reifen nach Anspruch 9, bei welchem das Verhältnis zwischen etwa 4/3 und etwa 4 liegt.

11. Reifen nach einem der Ansprüche 8 bis 10, bei welchem die wellenförmige Erstreckung (11) eine sinusförmige Erstreckung ist.

12. Reifen nach einem der vorhergehenden Ansprüche, bei welchem die Halteelemente (10) an Wendepunkten (F) des langgestreckten Körpers (7) angeordnet sind.

13. Reifen nach einem der Ansprüche 8 bis 11, bei welchem die Halteelemente (10) an den axial beabstandeten Enden der wellenförmigen Erstreckung (11) des langgestreckten Körpers (7) angeordnet sind.

14. Reifen nach einem der Ansprüche 1 bis 12, bei welchem die Halteelemente (10) im Wesentlichen in der Äquatorialebene (E) des Reifens (1) angeordnet sind.

15. Reifen nach einem der vorhergehenden Ansprüche, welcher weiterhin eine Steuereinheit (3) zum Empfangen und/oder Senden von Identifikationsparametern des Reifens (1) durch die Antenne (6) aufweist.

16. Reifen nach einem der Ansprüche 1 bis 14, welcher weiterhin eine Steuereinheit (3) zum Empfangen und/oder Senden von Betriebsparametern des Reifens (1) durch die Antenne (6) aufweist.

17. Reifen nach Anspruch 16, bei welchem die Steuereinheit (3) an der radial inneren Fläche (2) des Reifens (1) angebracht ist und ein erstes und ein zweites Ende (3a, 3b) hat, wobei der langgestreckte Körper (7) ein erstes Ende (7a), das dem ersten Ende (3a) der Steuereinheit (3) funktionsmäßig zugeordnet ist, und ein zweites Ende (7b) hat, das dem zweiten Ende (3b) der Steuereinheit (3) funktionsmäßig zugeordnet ist.

18. Reifen nach einem der vorhergehenden Ansprüche, bei welchem die Antenne (6) eine Impedanz zwischen etwa 0,02 Ohm und etwa 10 Ohm hat.

19. Reifen nach Anspruch 18, bei welchem die Antenne eine Impedanz (6) zwischen etwa 0,02 Ohm und etwa 5 Ohm hat.

20. Reifen nach Anspruch 1, bei welchem die Halteelemente (10) einen Koppelungseinsatz (13) aufweisen, der mit wenigstens einem Klebstoffelement (14) versehen ist, das zwischen dem langgestreckten Körper (7) und der Innenfläche (2) angeordnet ist.

21. Reifen nach Anspruch 20, bei welchem jeder der Koppelungseinsätze (13) weiterhin eine elastomere Schicht (15) aufweist, die zwischen dem Klebstoffelement (14) und dem langgestreckten Körper (7) angeordnet ist.

22. Reifen nach einem der Ansprüche 1 bis 19, bei welchem die radial innere Fläche (2) des Reifens (1) wenigstens eine radial innere Leiste (16) für einen gegenseitigen Eingriff zwischen dem langgestreckten Körper (7) und dem Reifen (1) aufweist.

23. Reifen nach Anspruch 22, bei welchem die wenigstens eine Leiste (16) mit einem oder mehreren Eingriffssitzen (17) versehen ist, von denen jeder das Halteelement (10) zwischen dem langgestreckten Körper (7) und der radial inneren Fläche (2) des Reifens (1) bildet.

24. Reifen nach Anspruch 22 oder 23, bei welchem die Leiste (16) von einer Hauptrippe (18) gebildet wird, die auf der radial inneren Fläche (2) des Reifens (1) am Umfang durchgehend ausgebildet und im Wesentlichen in seiner Äquatorialebene (E) angeordnet ist.

25. Reifen nach einem der Ansprüche 22 bis 24, welcher weiterhin eine oder mehrere Halteleisten (20) an der radial inneren Fläche (2) des Reifens (1) aufweist, auf der der langgestreckte Körper (7) sitzt.

26. Reifen nach Anspruch 25, bei welchem die eine oder mehrere Halteleisten (20) ein Paar von am Umfang fortlaufenden Zusatzrippen (21) aufweisen, die in zu der Äquatorialebene (E) des Reifens (1) parallelen Ebenen auf gegenüberliegenden Seiten bezüglich der Hauptrippe (18) angeordnet sind.

27. Reifen nach einem der Ansprüche 22 bis 26, welcher radial außerhalb der radial inneren Leiste (16) eine zusätzliche Schicht aufweist.

28. Reifen nach Anspruch 27, bei welchem die zusätzliche Schicht eine axiale Breite zwischen etwa 60 mm und etwa 100 mm und eine radiale Dicke zwischen etwa 0,1 mm und etwa 0,3 mm hat.

29. Reifen nach einem der vorhergehenden Ansprüche, bei welchem die Antenne (6) eine offene Bauweise hat.

30. Reifen nach einem der Ansprüche 1 bis 28, bei welchem die Antenne (6) eine geschlossene Bauweise hat.

31. Verfahren zum Anbringen wenigstens einer Antenne (6) auf einer radial inneren Fläche (2) eines Reifens (1) mit einer im Wesentlichen torusförmigen Ausgestaltung, wobei das Verfahren die folgenden Schritte aufweist:
- Legen wenigstens eines elektrisch leitenden langgestreckten Körpers (7) und
- Befestigen des langgestreckten Körpers (7) an der inneren Fläche (2) an einer Vielzahl von Halteelementen (10),
**dadurch gekennzeichnet,**
- **dass** jedes Paar von aufeinanderfolgenden Halteelementen (10) einen orthodromen Abstand (D) bildet, der kleiner ist als die Länge des Abschnitts (7c) des langgestreckten Körpers zwischen dem Paar von Elementen (10).

32. Verfahren nach Anspruch 31, bei welchem der Schritt des Befestigens des langgestreckten Körpers (7) an der radial inneren Fläche (2) die folgenden Schritte aufweist:
- Positionieren der Halteelemente (10) auf der radial inneren Fläche (2) des Reifens (1) und
- In-Eingriff-Bringen des langgestreckten Körpers (7) mit jedem der Halteelemente (10).

33. Verfahren nach Anspruch 32, bei welchem der Schritt des Anordnens des Halteelements (10) einen Schritt aufweist, ein Klebstoffelement (14) zwischen dem langgestreckten Körper (7) und der radial inneren Fläche (2) anzuordnen.

34. Verfahren nach Anspruch 33, bei welchem der Schritt des Anordnens des Halteelements (10) einen Schritt aufweist, eine Schicht aus elastomerem Material (15) zwischen dem Klebstoffelement (14) und dem langgestreckten Körper (7) anzuordnen.

35. Verfahren nach einem der Ansprüche 31 bis 34, bei welchem die Halteelemente (10) an der radial inneren Fläche (2) des Reifens (1) im Wesentlichen auf dessen Äquatorialebene (E) befestigt werden.

36. Verfahren nach einem der Ansprüche 33 bis 35, bei welchem der Schritt des In-Eingriff-Bringens des langgestreckten Körpers (7) mit den Halteelementen (10) ausgeführt wird, bevor die Halteelemente (10) auf der radial inneren Fläche (2) angeordnet werden.

37. Verfahren nach Anspruch 32, bei welchem der Schritt des Befestigens des langgestreckten Körpers (7) an der inneren Fläche (2) weiterhin
- ein Setzen eines jeden Halteelements (10) einer Aufeinanderfolge (23) von ihnen in Eingriff mit den benachbarten Halteelementen durch einen vorläufigen Halter,
- ein In-Eingriff-Bringen des langgestreckten Körpers (2) mit den Halteelementen (10),
- ein In-Eingriff-Bringen der Halteelemente (10) mit der inneren Fläche (2) und
- ein Entfernen des vorläufigen Halters (22) aufweist.

38. Verfahren nach Anspruch 31, bei welchem der Schritt des Befestigens des langgestreckten Körpers (7) an der radial inneren Fläche (2)
- ein Anordnen wenigstens einer radial inneren Leiste (16) an der radial inneren Fläche (2) und
- ein Ausbilden wenigstens eines Eingriffssitzes (17) in der wenigstens einen Leiste (16) aufweist, wobei jeder Sitz ein entsprechendes Halteelement (10) zwischen dem langgestreckten Körper (7) und der radial inneren Fläche (2) bildet.

39. Verfahren nach Anspruch 38, bei welchem der Schritt des Befestigens des langgestreckten Körpers (7) an der radial inneren Fläche (2) die Schritte aufweist:
- In-Eingriff-Bringen des langgestreckten Körpers (7) in dem wenigsten einen Eingriffssitz (17) und
- Abdecken des wenigstens einen Eingriffssitzes (17) und des darin in Eingriff stehenden langgestreckten Körpers (7) mit wenigstens einer Schicht eines Klebstoffmaterials.

40. Verfahren nach Anspruch 38, bei welchem der Schritt des Ausbildens der wenigstens einen Leiste (16) einen Schritt aufweist, eine am Umfang durchgehende Hauptrippe (18) auf der radial inneren Fläche (2) auszubilden, wobei die Längssymmetrieachse der Hauptrippe (18) im Wesentlichen in der Äquatorialebene (E) des Reifens (1) liegt.

41. Verfahren nach einem der Ansprüche 38 bis 40, welches weiterhin den Schritt aufweist, wenigstens eine Halteleiste (20) auszubilden, an der der langgestreckte Körper (7) sitzt.

42. Verfahren nach Anspruch 41, bei welchem der Schritt des Herstellens wenigstens einer Halteleiste (20) einen Schritt aufweist, ein Paar von am Umfang durchgehenden Zusatzrippen (21) an der radial inneren Fläche (2) auszubilden, wobei die Zusatzrippen in Ebenen parallel zur Äquatorialebene (E) des Reifens (1) auf gegenüberliegenden Seiten bezogen auf die Hauptrippe (18) angeordnet werden.

43. Verfahren nach einem der Ansprüche 38 bis 42, bei welchem der Schritt des Anordnens wenigstens einer radial inneren Leiste (16) an der radial inneren Fläche (2) nach einem Schritt ausgeführt wird, bei dem eine zusätzliche Schicht in einer radial inneren Position an der radial inneren Fläche (2) des Reifens (1) angeordnet wird.

## Revendications

1. Pneu pour roues de véhicule ayant une surface radialement intérieure (2) de structure substantiellement toroïdale, comprenant :
- au moins une antenne (6) pourvue d'un corps allongé électriquement conducteur (7) engagé avec ladite surface radialement intérieure (2) par l'intermédiaire d'une pluralité d'éléments de contrainte (10) ;
**caractérisé en ce que** chaque paire d'éléments de contrainte (10) consécutifs identifie une distance orthodromique (D) inférieure à la longueur de la partie de corps allongé (7c) comprise entre les éléments (10) de ladite paire.

2. Pneu selon la revendication 1, dans lequel ledit corps allongé (7) comprend :
- au moins un conducteur électrique (8) ;
- au moins un revêtement protecteur (9) pour ledit conducteur électrique (8).

3. Pneu selon la revendication 2, dans lequel ledit revêtement protecteur est fait d'un matériau ayant une résistance électrique spécifique, selon la norme UNI 4288, comprise entre environ 100 ohms/mètre et environ 10⁹ ohms/mètre.

4. Pneu selon la revendication 2 ou 3, dans lequel ledit conducteur électrique (8) comprend un câble constitué de sept torons, formés chacun de trois fils métalliques.

5. Pneu selon la revendication 4, dans lequel un toron central est constitué de fils de cuivre et les six torons restants sont constitués de fils d'acier revêtus de laiton.

6. Pneu selon la revendication 2 ou 3, dans lequel ledit conducteur électrique (8) comprend un câble constitué de trois torons, formés chacun de trois fils métalliques.

7. Pneu selon la revendication 2 ou 3, dans lequel ledit conducteur électrique (8) comprend un câble constitué de deux fils d'acier revêtus de laiton enroulés sur eux-mêmes et torsadés avec deux fils d'aluminium enroulés sur eux-mêmes.

8. Pneu selon l'une quelconque des revendications précédentes, dans lequel ledit corps allongé (7) engagé avec ladite surface radialement intérieure (2) du pneu (1) a une étendue ondulée (11).

9. Pneu selon la revendication 8, dans lequel ladite étendue ondulée (11) a une hauteur d'onde (H) et un pas d'onde (P), le rapport entre le pas (P) et ladite hauteur (H) étant compris entre environ 1 et environ 5.

10. Pneu selon la revendication 9, dans lequel ledit rapport est compris entre environ 4/3 et environ 4.

11. Pneu selon l'une quelconque des revendications 8 à 10, dans lequel ladite étendue ondulée (11) est une étendue sinusoïdale.

12. Pneu selon l'une quelconque des revendications précédentes, dans lequel lesdits éléments de contrainte (10) sont situés en des points d'inflexion (F) dudit corps allongé (7).

13. Pneu selon l'une quelconque des revendications 8 à 11, dans lequel lesdits éléments de contrainte (10) sont situés aux extrémités axialement espacées de l'étendue ondulée (11) dudit corps allongé (7).

14. Pneu selon l'une quelconque des revendications 1 à 12, dans lequel lesdits éléments de contrainte (10) sont positionnés substantiellement dans le plan équatorial (E) dudit pneu (1).

15. Pneu selon l'une quelconque des revendications précédentes, comprenant en outre une unité de commande (3) pour recevoir et/ou transmettre des paramètres d'identification dudit pneu (1) par l'intermédiaire de ladite antenne (6).

16. Pneu selon l'une quelconque des revendications 1 à 14, comprenant en outre une unité de commande (3) pour recevoir et/ou transmettre des paramètres de fonctionnement dudit pneu (1) par l'intermédiaire de ladite antenne (6).

17. Pneu selon la revendication 16, dans lequel ladite unité de commande (3) est montée sur la surface radialement intérieure (2) dudit pneu (1) et a une première et une deuxième extrémité (3a, 3b), ledit corps allongé (7) ayant une première extrémité (7a) associée fonctionnellement à la première extrémité (3a) de ladite unité de commande (3), et une deuxième extrémité (7b) associée fonctionnellement à la deuxième extrémité (3b) de ladite unité de commande (3).

18. Pneu selon l'une quelconque des revendications précédentes, dans lequel ladite antenne (6) a une impédance comprise entre environ 0,02 ohm et environ 10 ohms.

19. Pneu selon la revendication 18, dans lequel ladite antenne a une impédance (6) comprise entre environ 0,02 ohm et environ 5 ohms.

20. Pneu selon la revendication 1, dans lequel chacun desdits éléments de contrainte (10) comprend un insert de couplage (13) pourvu d'au moins un élément adhésif (14) intercalé entre ledit corps allongé (7) et ladite surface intérieure (2).

21. Pneu selon la revendication 20, dans lequel chacun desdits inserts de couplage (13) comprend de plus une couche d'élastomère (15) intercalée entre ledit élément adhésif (14) et ledit corps allongé (7).

22. Pneu selon l'une quelconque des revendications 1 à 19, dans lequel la surface radialement intérieure (2) dudit pneu (1) comporte au moins une strie radialement intérieure (16) permettant l'engagement mutuel entre ledit corps allongé (7) et ledit pneu (1).

23. Pneu selon la revendication 22, dans lequel ladite au moins une strie (16) est pourvue d'un ou plusieurs sièges d'engagement (17), chacun définissant ledit élément de contrainte (10) entre ledit corps allongé (7) et la surface radialement intérieure (2) dudit pneu (1).

24. Pneu selon la revendication 22 ou 23, dans lequel ladite strie (16) est définie par une nervure principale (18) qui est continue dans le sens de la circonférence sur la surface radialement intérieure (2) dudit pneu (1) et qui est positionnée substantiellement dans le plan équatorial (E) de ce dernier.

25. Pneu selon l'une quelconque des revendications 22 à 24, comprenant en outre une ou plusieurs stries de support (20) sur la surface radialement intérieure (2) du pneu (1) sur laquelle repose ledit corps allongé (7).

26. Pneu selon la revendication 25, dans lequel lesdites une ou plusieurs stries de support (20) comprennent une paire de nervures auxiliaires continues dans le sens de la circonférence (21) positionnées dans des plans parallèles au plan équatorial (E) dudit pneu (1), sur des côtés opposés par rapport à la nervure principale (18).

27. Pneu selon l'une quelconque des revendications 22 à 26, dans lequel ledit pneu (1) comprend une couche auxiliaire radialement externe à ladite strie radialement intérieure (16).

28. Pneu selon la revendication 27, dans lequel ladite couche auxiliaire a une largeur axiale comprise entre environ 60 mm et environ 100 mm, et une épaisseur radiale comprise entre environ 0,1 mm et environ 0,3 mm.

29. Pneu selon l'une quelconque des revendications précédentes, dans lequel l'antenne (6) est du type ouvert.

30. Pneu selon l'une quelconque des revendications 1 à 28, dans lequel l'antenne (6) est du type fermé.

31. Procédé de mise en place d'au moins une antenne (6) sur une surface radialement intérieure (2) d'un pneu (1) de structure substantiellement toroïdale, ledit procédé comprenant les étapes suivantes :
- mise en place d'au moins un corps allongé électriquement conducteur (7) ;
- fixation dudit corps allongé (7) sur ladite surface intérieure (2) au niveau d'une pluralité d'éléments de contrainte (10), **caractérisé en ce que** chaque paire d'éléments de contrainte (10) consécutifs identifie une distance orthodromique (D) inférieure à la longueur de la partie de corps allongé (7c) comprise entre les éléments (10) de ladite paire.

32. Procédé selon la revendication 31, dans lequel l'étape de fixation dudit corps allongé (7) sur ladite surface radialement intérieure (2) comprend les étapes suivantes :
- positionnement desdits éléments de contrainte (10) sur la surface radialement intérieure (2) du pneu (1) ;
- mise en engagement dudit corps allongé (7) avec chacun desdits éléments de contrainte (10).

33. Procédé selon la revendication 32, dans lequel l'étape de positionnement dudit élément de contrainte (10) comprend une étape consistant à intercaler un élément adhésif (14) entre ledit corps allongé (7) et ladite surface radialement intérieure (2).

34. Procédé selon la revendication 33, dans lequel l'étape de positionnement dudit élément de contrainte (10) comprend une étape consistant à disposer une couche de matériau élastomère (15) entre ledit élément adhésif (14) et ledit corps allongé (7).

35. Procédé selon l'une quelconque des revendications 31 à 34, dans lequel lesdits éléments de contrainte (10) sont fixés sur la surface radialement intérieure (2) du pneu (1) substantiellement au niveau du plan équatorial (E) de ce dernier.

36. Procédé selon l'une quelconque des revendications 33 à 35, dans lequel l'étape de mise en engagement dudit corps allongé (7) avec lesdits éléments de contrainte (10) est exécutée avant le positionnement desdits éléments de contrainte (10) sur ladite surface radialement intérieure (2).

37. Procédé selon la revendication 32, dans lequel l'étape de fixation dudit corps allongé (7) sur ladite surface intérieure (2) comprend en outre :
- la mise en place d'une succession (23) d'éléments de contrainte (10), chacun en engagement avec les éléments de contrainte (10) voisins par l'intermédiaire d'une contrainte provisoire (22) ;
- la mise en engagement dudit corps allongé (7) avec lesdits éléments de contrainte (10) ;
- la mise en engagement desdits éléments de contrainte (10) avec ladite surface intérieure (2) ;
- le retrait de ladite contrainte provisoire (22).

38. Procédé selon la revendication 31, dans lequel l'étape de fixation dudit corps allongé (7) sur ladite surface radialement intérieure (2) comprend :
- la mise en place d'au moins une strie radialement intérieure (16) sur ladite surface radialement intérieure (2) ;
- la formation d'au moins un siège d'engagement (17) dans ladite au moins une strie (16), chaque siège définissant un élément de contrainte (10) respectif entre ledit corps allongé (7) et ladite surface radialement intérieure (2).

39. Procédé selon la revendication 38, dans lequel ladite étape de fixation dudit corps allongé (7) sur ladite surface radialement intérieure (2) comprend les étapes consistant à :
- engager ledit corps allongé (7) dans ledit au moins un siège d'engagement (17) ;
- couvrir ledit au moins un siège d'engagement (17) et ledit corps allongé (7) engagé dedans avec au moins une couche de matériau adhésif.

40. Procédé selon la revendication 38, dans lequel l'étape de formation de ladite au moins une strie (16) comprend une étape consistant à réaliser une nervure principale continue dans le sens de la circonférence (18) sur ladite surface radialement intérieure (2), l'axe de symétrie longitudinal de ladite nervure principale (18) étant substantiellement contenu dans le plan équatorial (E) du pneu (1).

41. Procédé selon l'une quelconque des revendications 38 à 40, comprenant en outre une étape consistant à réaliser au moins une strie de support (20) sur laquelle repose ledit corps allongé (7).

42. Procédé selon la revendication 41, dans lequel l'étape de formation de ladite au moins une strie de support (20) comprend une étape consistant à réaliser une paire de nervures auxiliaires continues dans le sens de la circonférence (21) sur ladite surface radialement intérieure (2), lesdites nervures auxiliaires étant positionnées dans des plans parallèles au plan équatorial (E) dudit pneu (1), sur des côtés opposés par rapport à ladite nervure principale (18).

43. Procédé selon l'une quelconque des revendications 38 à 42, dans lequel l'étape de mise en place d'au moins une strie radialement intérieure (16) sur ladite surface radialement intérieure (2) est exécutée après une étape de mise en place d'une couche auxiliaire en une position radialement interne à ladite surface radialement intérieure (2) du pneu (1).
